# EUROPEAN PATENT APPLICATION

(11) **EP 1 551 183 A1**
(43) Date of publication of application: **06.07.2005**
(21) Application number: 04106236.5
(22) Date of filing: 02.12.2004
(51) Int. Cl.: H04N 7/173

(54) **System for providing programme content**

(30) Priority: 29.12.2003 FI 20030490 U
(71) Applicant: MTV Oy, 00240 Helsinki (FI)
(72) Inventor: Mauno, Jukka, 00270 Helsinki (FI)
(74) Representative: Äkräs, Tapio

(57) **Abstract**

The invention relates to a system for providing programme content for an interactive television programme. The system receives electronic messages (SMS, MMS) from TV viewers via a communication service of a public telecommunications network. The system generates (3) on the basis of the content of the messages synthesized speech and an animated character (4) whose movements are synchronized with the synthesized speech. The audio-video information provided is modified into programme content, which is broadcast (7, 8, 9) to TV sets via a television broadcast system.

## Description

The present invention relates to television systems.

The majority of television broadcasts consist of programmes that are broadcast to all subscribers in the coverage area of a given terrestrial television network or television satellite. Typical such programmes include films, television serials, news, sportscasts etc. The majority of these programmes have been produced and recorded in advance, a smaller part being live broadcasts (in real time).

A general tendency has been that people wish to participate in discussions in different forums more and more actively. In conventional telecommunications networks, this has led to new services which allow clients to participate in different talk or chat groups by means of their subscriber stations. In a conventional telephone network, the chat groups are established as a group call, in which all subscribers having called a given telephone number are connected to the same call. On the Internet, subscribers can use Internet browsers and chat in chat groups established in given Internet servers. In mobile networks, subscribers can participate not only in speech chat groups mentioned above but also in short message chat groups, where a short message sent by a group member is transmitted to all group members.

Interactivity and an opportunity for discussion have also been introduced into television programmes. In live broadcasts, viewers can phone or send short messages or e-mail to the production site of the programme to present questions or comments, or to participate in a competition. The production staff of the programme select suitable contacts, using them in the programme. In this way, viewers can contribute to the progress and content of the programme to some extent.

Introduction of a digital television (DVB, Digital Video Broadcasting) increases the television broadcast capacity significantly and offers the option of additional services, such as a data service in addition to one or more conventional video programme services. In order to fill the increased programme capacity, new programme formats are needed, and it should also be possible to produce them at low cost.

WO 9963729, WO 0027115 and EP 0880293 disclose a system in which short messages sent by mobile phones are automatically displayed on text TV pages.

WO 0232134 discloses a method of producing an interactive television programme, in which TV viewers send electronic messages, such as short messages of a mobile system, to a programme production system by using a communication service of a public telecommunications network. The production system comprises means with which the electronic messages are received and their content automatically converted into programme content where the written messages are arranged to be displayed on a television screen. The production system may also include equipment with which the moderator of the programme can monitor the programme content and, if required, intervene before the programme is broadcast via a television broadcast system. The programme content can be broadcast as video information in a way similar to a conventional television programme or as a data service of a digital television system.

An object of the invention is an improved system for producing an interactive programme.

This object is achieved with a system according to claim 1. Preferred embodiments of the invention are presented in dependent claims.

A system according to an embodiment of the invention receives electronic messages from viewers via a communication service of a public telecommunications network. On the basis of the content of the messages, the equipment generates synthesized speech and an animated character whose movements are synchronized with the synthesized speech. The audio-video information produced is modified into programme content, which is broadcast to TV sets via a television broadcast system.

Conventional text scrolling over a television screen contributes to wasting the capacity used for transmission of image information. By means of the invention, the text can be replaced with synthesized speech and an animated character, which further releases transmission capacity and screen area for other information. An animated "talking head", whose lip movements have been synchronized with the synthesized speech, makes the speech more readily understandable for a viewer. In addition, the invention enables new interactive solutions for a television programme, with regard to both image and voice.

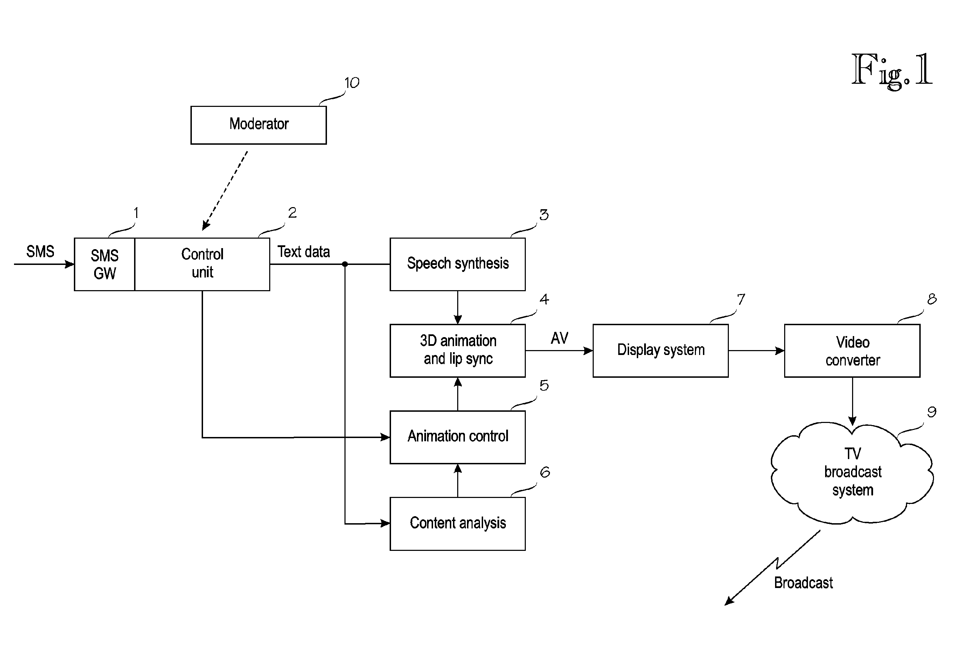

The invention will be described in more detail in the following with reference to the attached drawing, in which Figure 1 illustrates an exemplary system with which production of an interactive television programme can be implemented.

The present invention can be applied to any television channel and in any country where a suitable communication service of a public telecommunications network is available for sending electronic messages from viewers to a production system. In the preferred embodiments of the invention, described in the following, such a communication service is the short message service (SMS) of a digital public land mobile network (PLMN), but the transmission of messages can also be based on any other messaging service or communication mechanism, such as e-mail or a web site established in the server of programme production system, for which the viewers can write messages with a conventional web browser. A TV broadcast system refers to any types of terrestrial television networks, satellite television systems, cable television systems etc.

With regard to the invention, changing communication systems causes changes only in the entity receiving messages, such as in the SMS gateway 1 in Figure 1, which should thus be configured to suit each particular communication manner.

Referring to Figure 1, a short message gateway SMS GW1 receiving short messages SMS is connected to a public land mobile network PLMN, which is for instance a GSM (Global System for Mobile Communication) network. This connection can be implemented in such a way that standard SMS messages can be exchanged between the SMS gateway 1 and mobile stations by means of the short message service of the PLMN network.

The SMS gateway 1 disassembles the received short message and feeds its content to the control unit 2. By means of a control unit 2, the moderator 10 of the programme is able to control the received messages and, if required, to modify or delete them. The moderator can also attach to the messages some information to be used later in animations and depicting the content of the messages. The messages or text data having passed the control unit 2 are fed further to a speech synthesizer 3 and a content analyzer 6. The control unit 2 also separates possible commands and smilies from the received messages and feeds them as commands to an animation control unit 5. The control unit 2 also transmits the information possibly inputted by the moderator 10 further to the control unit 5 as commands.

The speech synthesizer 3 generates synthesized speech, i.e. an audio signal, from the text data.

An embodiment of the invention includes a content analyzer 6, which analyzes messages, and outputs, as the result of the analysis, parameters representing the appearance, expression, movements, sex and/or emotional state or the like characteristic of the animated character, related to each particular message. The analysis may be based on recognizing certain words or expressions, for instance.

The animation control unit 5 uses commands received from the control unit 2 and parameters received from the content analyzer 6 under the control of a 3D animation unit 4 in such a way that the appearance, expression, movements and/or emotional state of the animated character matches with the spoken message. The commands and smilies sent with the message offer the message writer an opportunity to affect the way in which the animated character presents the message.

The animation unit 4 provides an animation, preferably a three-dimensional (3D) animation, for instance with a technique known as such. The animated character is preferably what is called a talking head, whose lip movements are synchronized with synthesized speech. Examples of animation techniques of the talking head are presented in US patents 5933151 and 6504546. The animation unit 4 provides digital audio-video (AV) information, which includes synthesized speech and animation synchronized with it. In this context, the animated character refers not only to a human character but to different animated animal or fictional characters, which have at least lip movements synchronized with synthesized speech. It is also feasible to simultaneously animate several characters which speak different messages by turns, for example carrying out a dialogue made up by viewers' messages. In a preferred embodiment of the invention, the animation unit 4 uses image information transmitted via a public telecommunications network, for instance image information included in a multimedia message (MMS) transmitted via a mobile network, as the basic image for creating a three-dimensional animated image, for instance a talking head. Controlled by the control unit 5 and on the basis of commands and/or smilies of a message transmitted via a mobile network, this image information is automatically modified into an animated three-dimensional image, for example a talking head.

Audio-video information AV, possibly initially modified with suitable publishing software, and possible other programme material are transferred to a display system 7. The display system 7 formats the received programme material into digital image that is applicable to a video converter 8. The digital image generated by the digital display system 7 is taken to the video converter 8, which generates a video signal suitable for a TV broadcast system 9. The signal may be, for example, an analogue video signal for conventional analogue TV broadcast systems. In the case of a digital TV broadcast system (DVB), the video converter 8 may be a digital video encoder that provides MPEG-2 video encoding (motion pictures experts group 2). The TV broadcast system 9 broadcasts the provided analogue or digital video information to TV sets.

The explanation of the preferred embodiments of the invention is only intended to illustrate the invention. Implementations of the invention may, however, vary in the scope of the invention.

## Claims

1. A system for providing programme content for an interactive television programme, comprising
means (1) for receiving messages (SMS, MMS) from viewers via a public telecommunications network;
means (2, 3, 4, 5, 6) for converting messages automatically into television programme content;
means (7, 8, 9) for transmitting programme content in a suitable format to the broadcast system to be broadcast to subscriber sets;
**characterized in that** said means providing programme content comprise
means (4) for generating an animated character;
means (3) for generating synthesized speech on the basis of the content of the received messages;
means (4, 5, 6) for synchronizing the movements of the animated character and the synthesized speech with each other.

2. A system according to claim 1, **characterized in that** the means for generating an animated character comprise means (5, 6) for controlling the appearance, expressions, movements and/or emotional states of the animated character on the basis of the content of the received messages.

3. A system according to claim 1 or 2, **characterized in that** the received messages contain control commands for controlling the animated character.

4. A system according to claim 3, **characterized in that** the control commands include text commands.

5. A system according to claim 3 or 4, **characterized in that** the control commands contain smilies.

6. A system according to any one of the preceding claims, **characterized in that** the character is three-dimensional.

7. A system according to any one of the preceding claims, **characterized in that** said messages are short messages (SMS) that have been sent from mobile stations (MS1, MS2) of a mobile system.

8. A system according to any one of the preceding claims, **characterized in that** said means (4) for generating a three-dimensional animated image utilize image information transmitted via a public telecommunications network as the basic image, and that said means (4) are controlled automatically via a telecommunications network by means of commands and/or smilies of the transmitted message for modifying said image information into an animated speaking character.

9. A system according to claim 8, **characterized in that** said image information is included in a multimedia message (MMS) transmitted via a mobile network.
